# EUROPEAN PATENT APPLICATION

(11) **EP 0 970 988 A1**
(43) Date of publication of application: **12.01.2000**
(21) Application number: 99113086.5
(22) Date of filing: 06.07.1999
(51) Int. Cl.: C08K 3/00, C08L 87/00, H01B 1/20

(54) **Composite dielectric material, a solid organism phantom made therefrom, and a method of manufacturing the same**

(30) Priority: 10.07.1998 JP 19582998; 08.06.1999 JP 16166899
(71) Applicant: Murata Manufacturing Co., Ltd., Nagaokakyo-shi Kyoto-fu 617-8555 (JP)
(72) Inventor: Nagakubo, Hiroshi, c/o(A170) Intell.Prop.Dept., Nagaokakyo-shi, Kyoto-fu 617-8555 (JP); Koshika, Itaru, c/o(A170) Intell.Prop.Dept., Nagaokakyo-shi, Kyoto-fu 617-8555 (JP); Tomono, Kunisaburo, c/o(A170) Intell.Prop.Dept., Nagaokakyo-shi, Kyoto-fu 617-8555 (JP); Higuchi, Yukio, c/o(A170) Intell.Prop.Dept., Nagaokakyo-shi, Kyoto-fu 617-8555 (JP); Oshima, Toshiya, c/o(A170) Intell.Prop.Dept., Nagaokakyo-shi, Kyoto-fu 617-8555 (JP)
(74) Representative: Schoppe, Fritz, Dipl.-Ing.

(57) **Abstract**

The invention provides a composite dielectric material comprising: 40 - 90 vol% of a thermosetting resin; and 10 - 60 vol% of an electrically conductive powder, where a total amount including said resin and said powder is 100 vol%.

The invention also provides a composite dielectric material comprising: 40 - 90 vol% of a thermosetting resin; 50 vol% or less, excluding 0 vol% of a dielectric ceramic powder; and 10 - 60 vol% of an electrically conductive powder, where a total amount including said resin, said dielectric ceramic powder and said electrically conductive powder is 100 vol%.

The above described composite dielectric material is used for a solid organism phantom (1) in a frequency band of a microwave.

## Description

### BACKGROUND OF THE INVENTION

### 1. Field of the Invention

The present invention relates to a composite dielectric material, a solid organism phantom for use as a pseudo human body in a frequency band of a microwave.

### 2. Description of the Related Art

In the development and evaluation of an electromagnetic wave generating device such as a portable radio communication device for use in the vicinity of a human body, there has been found a fact that electromagnetic wave is possibly interfered by a human body although such an interference depends upon a wave length of an electromagnetic wave, and also a fact that electromagnetic wave may be easily absorbed by a human body. Thus, it is necessary to make clear a mutual relationship between the electromagnetic wave and a human body. However, in considering an influence of the electromagnetic wave on a human body, it is impossible to carry out a quantitative determination and hence it is difficult to perform a required standardization, because an actual evaluation of human bodies will indicate that one human body is different from another human body in various parameters. Moreover, since it is impossible to continuously perform a long time measurement on a human body, it is in fact not allowed to perform a direct observation and evaluation on the behaviour of an electromagnetic wave within a human body. For this reason, people have been using an organism phantom which is a pseudo organism phantom, so as to deduct and analyze an effect of an electromagnetic wave on a human body, thereby performing the desired observation and evaluation.

In the past, as a material for the formation of an organism phantom discussed in the above, there had been in use a semi-flowable material comprising a sodium chloride water solution, a polyethylene powder, and a gelling agent. However, with the passing of time, such semi-flowable material will become undesirably dried on the surface thereof, and moisture component will be undesirably separated from the inside of the material. As a result, mildew and bacteria will multiply, rendering it necessary to prepare a container to hold the shape of the semi-flowable material, hence bringing about some difficulties in the handling of the material.

To solve the above described problems, Japanese Unexamined Patent Publication No. 4-109508 has disclosed a composite dielectric material which is formed by dispersing a carbon powder and a ceramic powder having a high dielectric constant in and throughout a fluorine resin (Prior Art Example 1), and a method of manufacturing said material is disclosed in Japanese Unexamined Patent Publication No. 4-114631. Further, Japanese Unexamined Patent Publication No. 8-239513 has disclosed a composite dielectric material which is formed by dispersing a carbon fiber in rubber (Prior Art Example 2). With the use of the two composite dielectric materials, the solidification of pseudo organism has been realized, thereby solving the above problems which have been found in the above semi-flowable material.

However, with the above described composite dielectric material and the solid organism phantom, there have been found the following problems.

At first, description will be given to the above Prior Art Example 1. When, in Prior Art Example 1, a fluorine resin which is a thermoplastic resin is used to manufacture a solid organism phantom, it is required to have a process of forming a plurality of plate-like piece members by virtue of injection molding, a process of laminating one upon another the plate-like piece members to form a block assembly, and a process of properly cutting the block assembly so as to obtain a desired model shape. As a result, the manufacturing of the solid organism phantom has a low productivity, requiring a long time for producing each phantom, resulting in an increased production cost.

Next, description will be given to the above Prior Art Example 2. Since the solid organism phantom of Prior Art Example 2 is formed by dispersing several weight percentages of a carbon fiber in and throughout a rubber, and since a high electric property equivalent to that of a true organism is obtained in a frequency band of a microwave, there have been found the following problems.
(1) Since an electric property will be affected by the orientation of carbon fibers, there is an undesired anisotropy in the electric property of a solid organism phantom.
(2) Since the carbon fibers will be broken when being dispersed in and throughout the rubber, it is difficult to perform necessary control on dispersing conditions.
(3) Since an electric property will change in an amount which is several times its original property only due to 1 wt% difference in an amount of added carbon fibers, it is also difficult to perform a desired composition control.

### SUMMARY OF THE INVENTION

To overcome the above described problems, preferred embodiments of the present invention provide a composite dielectric material whose electric property is uniform and stabilized so that it can be used to manufacture a solid organism phantom in an increased amount, with a shortened time and a reduced cost.

One preferred embodiment of the present invention provides a composite dielectric material comprising: 40 - 90 vol% of a thermosetting resin; and 10 - 60 vol% of an electrically conductive powder, where a total amount including said resin and said powder is 100 vol%.

According to the above described composition, it is possible for said composite dielectric material to obtain a high dielectric constant which is the same as that of a human body in a frequency band of a microwave, and since such composite dielectric material is in a solid state under a room temperature, it is easy to be dealt with when in use, thereby making it sure to obtain a uniform and stabilized electric property. Further, since the thermosetting resin is mixed with a matrix resin, it is possible to perform an injection molding process, thereby making it ensure to manufacture a composite dielectric material with an increased ease, a shortened time, and with an improved productivity.

Another preferred embodiment of the present invention provides a composite dielectric material comprising:
40 - 90 vol% of a thermosetting resin;
50 vol% or less, excluding 0 vol% of a dielectric ceramic powder; and
10 - 60 vol% of an electrically conductive powder,
   where a total amount including said resin, said dielectric ceramic powder and said electrically conductive powder is 100 vol%.

Even if the above dielectric ceramic powder is not added, it is still possible to obtain a dielectric property which is the same as that of a human body. Nevertheless, by adding a dielectric ceramic powder in the above material, it is possible to easily perform an adjustment of the electric property of said material, thereby obtaining a composite dielectric material whose dielectric property is allowed to be adjusted easily and finely.

Yet another preferred embodiment of the present invention provides a solid organism phantom comprising: a molded body comprising the above described composite dielectric material.

With the use of the above constitution of the solid organism phantom, it is possible for the phantom to be employed as a solid pseudo human body under a room temperature, thereby making it sure to easily perform a measurement of an influence of an electromagnetic wave on a true human body.

The above described solid organism phantom may have a shape of a generally human figure imitating at least one part of a human contour.

In this way, by forming a shape of a generally human figure imitating part of a human body which is to be measured, it is possible to obtain more correct data as pseudo human body than a molded body of an geometrical shape.

In the above described solid organism phantom, the shape of the generally human figure may include an articular portion which is movable.

According to the above described structure and arrangement, it is possible for the phantom to obtain a certain freedom in forming into a desired pose, and such a phantom is suitable for use in various conditions irrespective of what shape an electromagnetic wave generating device is in, thus it is possible to obtain desired data under a condition which is very close to an actual situation as if a person is using the communication device.

Yet another preferred embodiment of the present invention provides a method of manufacturing a solid organism phantom, comprising the steps of: mixing and kneading dielectric ceramic powder and electrically conductive powder with a thermosetting resin to obtain a kneaded mixture; injecting the kneaded mixture into a formation mold and conducting a thermosetting treatment to form a molded part having a predetermined shape; and assembling together a plurality of said molded parts to form a predetermined configuration.

According to the above described method, even if the molded parts have complex configuration, a molding formation process may be easily conducted within only a shortened time. Furthermore, by separately forming solid organism phantom parts, these phantom parts, which are in fact partially molded bodies, are all movable independently from one another.

Other features and advantages of the present invention will become apparent from the following description of the invention which refers to the accompanying drawings.

### BRIEF DESCRIPTION OF DRAWINGS

Fig. 1 is a front view schematically indicating a solid organism phantom made according to one preferred embodiment of the present invention.
Fig. 2 is a side view schematically indicating the solid organism phantom made according to said one preferred embodiment of the present invention.
Fig. 3 is a front view schematically indicating a solid organism phantom made according to another preferred embodiment of the present invention.
Fig. 4 is an explanatory view schematically indicating a method of measuring an antenna radiation characteristic.
Fig. 5 is an explanatory view schematically indicating a method of measuring SAR.

### DESCRIPTION OF THE PREFERRED EMBODIMENTS

A composite dielectric material made according to the present invention is formed by mixing dielectric ceramic powder and electrically conductive powder into a thermosetting resin. Such composite dielectric material has a dielectric constant which is the same as that of a human body in a frequency band of a microwave. It is noted that the so called same dielectric constant as that of a human body in a frequency band of a microwave means that a relative dielectric constant (εr') is 5 - 80, a dielectric loss (tan δ) is 0.1 - 1.0, all under a condition in which a measured frequency is 1 GHz.

Further, as a thermosetting resin mentioned in the above, there should be no any limitation to said resin, provided that the resin is capable of thermosetting, such as an epoxy resin, a urethane resin and a silicon resin. Moreover, the content of the thermosetting resin in the composite dielectric material is 40 - 90 vol%, preferably 40 - 60 vol%.

Further, the dielectric ceramic powder mentioned in the above should not be limited in any specific manner, provided that said powder has a dielectric constant within a certain range. In more detail, said dielectric ceramic powder may be barium titanate, strontium titanate or titan oxide. The dielectric ceramic powder is added in an amount of 0 - 50 vol%, preferably 0 - 25 vol%.

Further, as an electrically conductive powder mentioned in the above, it is allowed to use a carbon powder such as graphite and carbon black, a metal-plated plastic powder or a metal powder. Such kind of electrically conductive powder is added in an amount of 10 - 60 vol%. In fact, there should not be any limitation to the sizes and shapes of both the dielectric ceramic powder and the electrically conductive powder.

Further, the solid organism phantom according to the present invention is formed by the composite dielectric material. There should be not any limitation to a method of forming said solid organism phantom, provided that such a method enables a desired configuration to be obtained for said phantom. Nevertheless, in view of an accuracy and an easy extent in the molding formation of said phantom and further in view of a molding formation time, it is preferable to employ a method of injection molding. As to the shape of the solid organism phantom, it is allowed to use an assembly formed by properly assembling together molded parts including a head, hands, arms and a body fuselage. Further, the molded parts are also allowed to be formed into spherical, elliptical spherical, solid cylindrical, solid elliptical cylindrical shapes. Moreover, when assembling together the molded parts, it is possible that the molded parts are directly engaged with one another so as to be maintained in the assembled positions. Also, it is allowed that the molded parts are assembled together by virtue of necessary articular members. On the other hand, it is required that the articular members are formed by a material which has little influence on an electromagnetic wave. For instance, it is allowed to utilize a plastic material such as a polycarbonate resin, nylon, and a acryl resin. Further, as to some of the above molded parts which have nothing to do with the measurement of electromagnetic wave, such molded parts are not necessarily required to be made by the above composite dielectric material. For example, some of the molded parts corresponding to arm portions of a human body, are allowed to be made by a plastic material.

Next, the composite dielectric material and the solid organism phantom, all made according to the present invention, will be described in more detail by way of the following working examples.

### First Preferred embodiment

A composite dielectric material according to the present invention was prepared in the following manner.

At first, a normal chain aliphatic glycidyl ether which is an epoxy resin serving as a thermosetting resin and a cyclic aliphatic amine serving as a hardening agent for hardening the thermosetting resin were prepared. The epoxy resin and the hardening agent were mixed together in a ratio of 3:1, thereby obtaining a two-liquid mixed resin.

Then, the dielectric ceramic powder was prepared which is BaO-CaO-ZrO-MgO-TiO ceramic having a relative dielectric constant (εr') of 10000 when at 1 kHz, a dielectric loss (tan δ) of 0.01 when at 1 kHz, and an average size of 2 µm.

Afterwards, carbon powder serving as an electrically conductive powder having a specific resistance of 1500 µΩ·cm, an average size of 25 µm.

Subsequently, the two-liquid mixed resin, the dielectric ceramic powder and the electrically conductive powder were mixed together in accordance with a composition shown in Table 1, thereby obtaining an admixture. Then, the thus obtained admixture was kneaded under a vacuum condition in order to remove some air bubbles possibly existing within the admixture, and was further injected under a vacuum condition into a cylindrical test piece mold having an outer diameter of 7 mm, an inner diameter of 3 mm and a length of 5 mm, followed by heating at a temperature of 100°C for two hours so as to harden the admixture, thereby obtaining the desired composite dielectric material.

A relative dielectric constant (εr') and a dielectric loss (tan δ) of thus obtained composite dielectric material were measured under a condition in which a measured frequency is 1 GHz, with the measurement results shown in Table 1. In the following Table 1, mark "X" is used to represent some of the obtained dielectric materials whose dielectric properties are not coincident with that of a human body, or those which can not be molded into a certain predetermined shape. Mark "△" is used to represent some of the obtained dielectric materials whose relative dielectric constants are 5 - 80 and whose dielectric loss are 0.1 - 1.0, which are all within a range of a dielectric property of a human body. Mark "○ " is used to represent some of the obtained dielectric materials whose relative dielectric constants are 20 - 70 and whose dielectric loss are 0.2 - 0.8, ensuring that these dielectric materials may be used sufficiently to form a pseudo human body. Mark "○○" is used to represent some of the obtained dielectric materials represented by mark "○", whose dielectric constants are 40 - 60 and whose dielectric loss are 0.3 - 0.6, indicating that these obtained dielectric materials have dielectric properties which are very close to that of a human body, i.e., extremely similar to a human body's muscle tissue having a high water content. However, in Table 1, a mark "*" is used to represent some of the obtained materials whose relevant parameters are out of the ranges prescribed in the present invention.

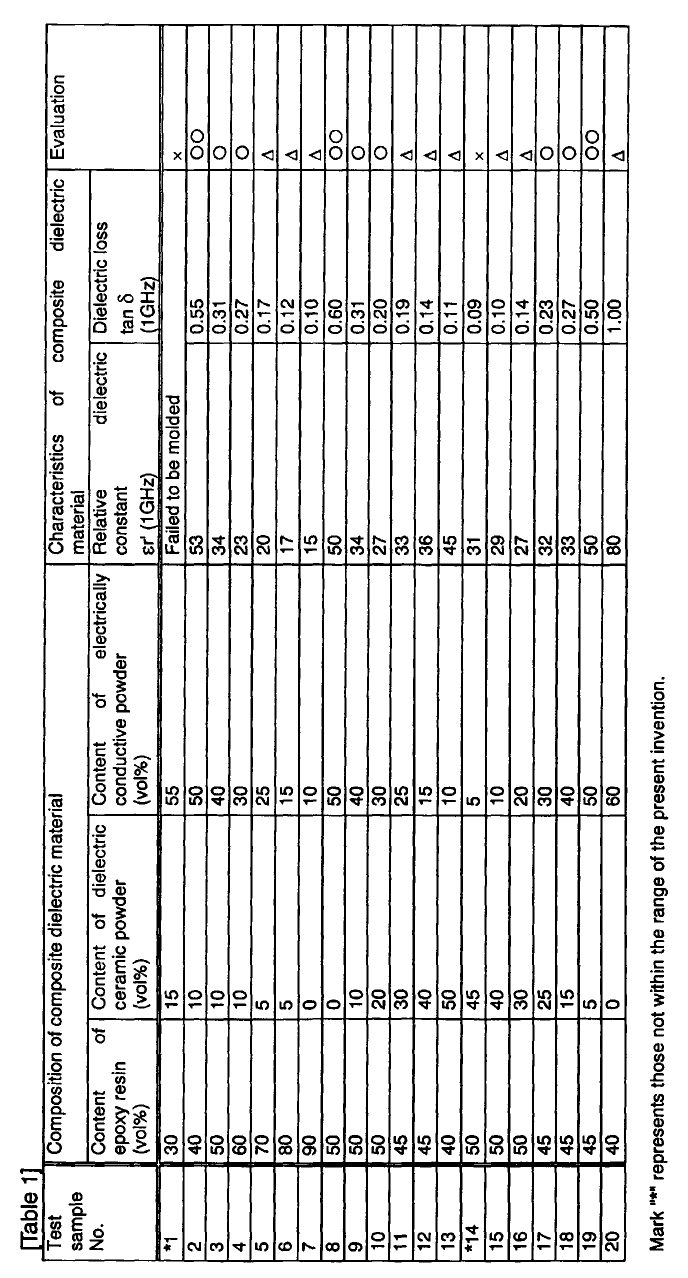

A shown in Table 1, the composite dielectric material made according to this example of the present invention can satisfy the dielectric properties of a human body, i.e., having a relative dielectric constant (εr') of 5 - 80, a dielectric loss (tan δ) of 0.1 - 1.0, all under a condition where a measured frequency is 1 GHz.

Here, an explanation will be given to a reason as to why there are some limitations to the content of the thermosetting resin, the content of the dielectric ceramic powder and the content of the electrically conductive powder in the present inevntion.

A reason as to why the content of the thermosetting resin should be set at 40 vol% or more may be explained as follow. Namely, as in the case of No. 1 of the test samples listed in Table 1, if the content of the thermosetting resin is less than 40 vol%, it is impossible for a composite dielectric material to be molded into a predetermined shape.

Further, a reason as to why the content of the electrically conductive powder should be set at 10 vol% or more may be explained as follow. Namely, as in the case of No. 14 of the test samples listed in Table 1, if the content of the electrically conductive powder is less than 10 vol%, a dielectric loss (tan δ) will become smaller than 0.1, a value that is not desired.

Furthermore, a reason as to why there is an upper limit to each of the contents of the thermosetting resin, the dielectric ceramic powder and the electrically conductive powder, may be explained as follows. Namely, if the upper limit for each of the above contents is exceeded, either the thermosetting resin or the electrically conductive powder will become less than its lower limit. As a result, it is impossible for the above composite dielectric material to be molded into a predetermined shape, and a dielectric loss (tan δ) will decrease.

### Second Preferred Embodiment

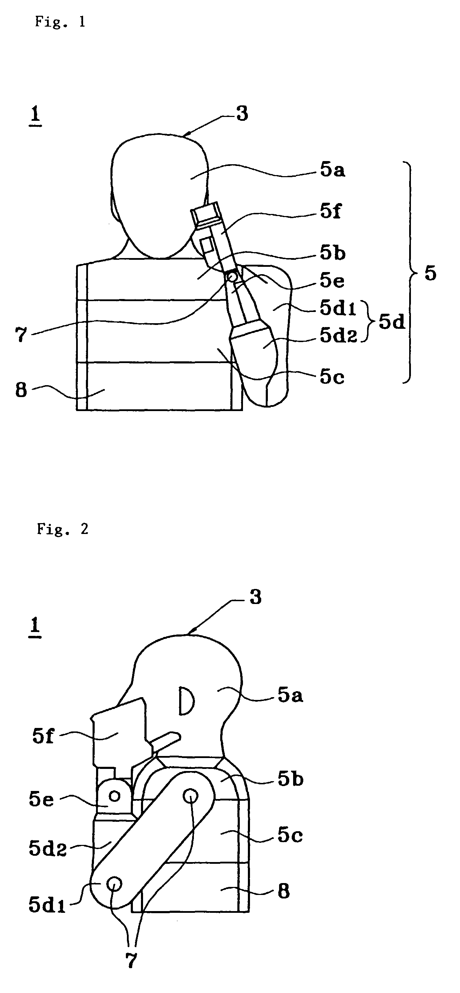

A test material used in this Second Preferred Embodiment is a composite dielectric material listed at No. 19 of the test materials prepared in the First Preferred Embodiment. As shown in Fig. 1 and Fig. 2, the composite dielectric material was injected under a vacuum condition into some predetermined molds, followed by thermosetting treatment, so as to form molded parts of a human body including a head portion, a shoulder portion, a chest portion, an upper arm portion, a lower arm portion, a wrist portion, a hand portion. After a cooling treatment, the molded composite dielectric body parts were removed from the molds, thereby obtaining molded parts of a human body, including a head portion 5a, a shoulder portion 5b, a chest portion 5c, an arm portion 5d including an upper arm portion 5d₁ and a lower arm portion 5d₂, a wrist portion 5e and a hand portion 5f. These molded parts were then assembled together through articular members 7 made of a plastic material, in a manner such that the molded parts are all movable through these articular members 7. After that, thus assembled pseudo human body is placed on a mounting table 8 which is also made of a plastic material, thereby obtaining a desired solid organism phantom 1.

The solid organism phantom 1 made in this example was then subjected to a predetermined measurement which measured an influence on a human body of an electromagnetic wave generated by a portable radio communication device.

In this embodiment, although only one kind of composite dielectric material was used to form a solid organism phantom 1, it is also possible to use composite dielectric materials having different relative dielectric constants and different dielectric losses, corresponding to different portions of a human body. On the other hand, movable portions of the solid organism phantom according to the present invention are not necessarily required to be made in the same manner as in this example. For example, it is also possible that the upper arm portions 5d₁ and the lower arm portions 5d₂ may be made integral with each, and that the arm portion 5d and wrist portion 5e may be made mutually integral.

### Third Preferred Embodiment

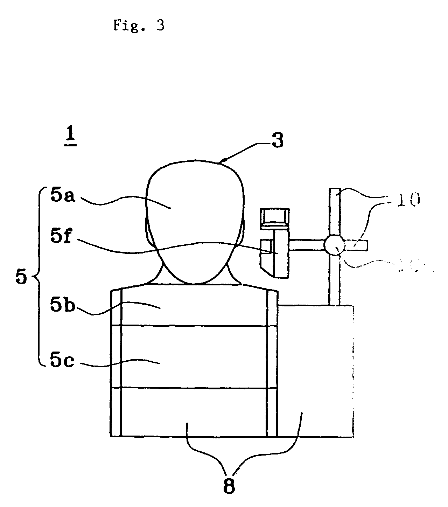

A test material used in this Third Preferred Embodiment is a composite dielectric material listed at No. 19 of the test materials prepared in the First Preferred Embodiment. As shown in Fig. 3, the composite dielectric material was injected under a vacuum condition into predetermined molds, followed by thermosetting treatment, so as to form molded parts of a human body including a head portion, a shoulder portion, a chest portion, a hand portion. After a cooling treatment, the molded composite dielectric body parts were removed from the molds, thereby obtaining molded parts for forming a pseudo human body, including a head portion 5a, a shoulder portion 5b, chest portion 5c, an arm portion 5f, and a hand portion 5f. These molded parts were then assembled together to form a solid organism phantom 1 to be placed on a mounting table 8 which is also made of a plastic material. Nevertheless, the hand portion 5f is installed on the mounting table 8 by means of two arm members 10 made of a plastic material. The two arm members 10 are held by a holding member 10a in a manner such that an angle formed between the two arm members 10 is freely adjustable. In this way, the position of the hand portion 5f provided on the front end position of one arm member 10 is also freely adjustable, enabling such adjustment to be performed in a relatively large space area.

Here, a detailed description will be given to a method of measuring an electromagnetic wave, with the use of a solid organism phantom made according to the present invention.

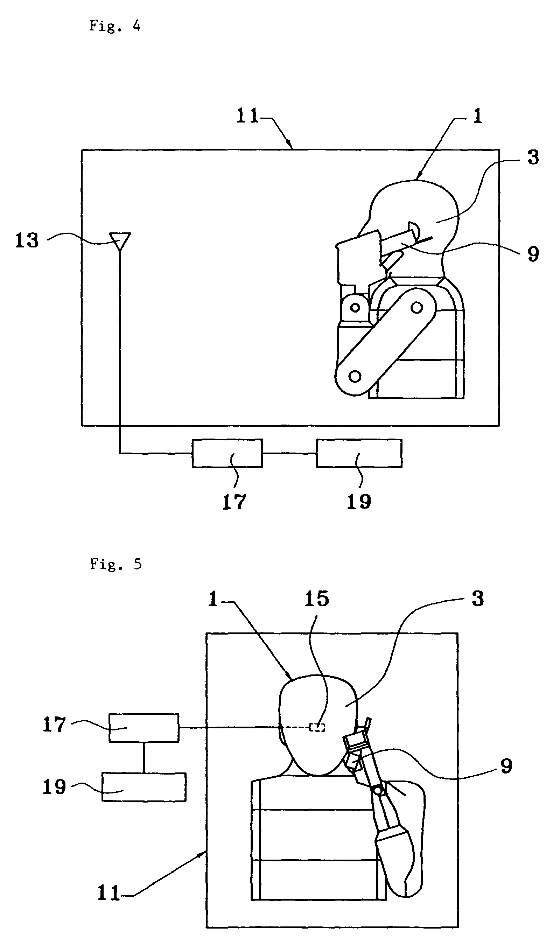

At first, in a case when we evaluate a radiation characteristic of an antenna by taking into account an influence on an electromagnetic wave (said influence is caused by a shielding action, an absorbing action and a scattering action of a human body, while said electromagnetic wave is generated by a portable radio communication device being used in the vicinity of a human body), a useful measurement method may be shown in Fig. 4. Referring to Fig. 4, an electromagnetic wave dark room 11 is used so enclose a solid organism phantom 1 and a portable radio communication device 9 positioned in the vicinity of the phantom 1 in a manner as if the portable radio communication device 9 is just being used by a person. In this way, an electric field intensity transmitted from the portable radio communication device 9 located in the vicinity of the solid organism phantom 1 is received by an antenna 13, thereby enabling the desired measurement of the radiation characteristic of the antenna, by way of an amplifier 17 and with the use of a spectrum analyzer 19.

Further, in a case when we measure SAR (Specific Absorption Rate) which is an evaluation index for evaluating an influence of an electromagnetic wave on a human body (said electromagnetic wave is generated by a portable radio communication device being used in the vicinity of a human body), a useful measurement method may be shown in Fig. 5. Referring to Fig. 5, a portable radio communication device 9 is positioned in the vicinity of a solid organism phantom in a manner as if the portable radio communication device 9 is just being used by a person. Then, an internal hole is caused to be formed within the solid organism phantom 1 and a measurement sensor 15 is inserted into the internal hole, so that an electromagnetic wave may be received into the interior of the solid organism phantom 1, thereby performing a desired measurement for directly measuring an electrical field, by means of an amplifier 17 and with the use of a spectrum analyzer 19.

Moreover, in a case when we measure SAR which is an evaluation index for evaluating an influence of an electromagnetic wave on a human body (said electromagnetic wave is generated by a portable radio communication device being used in the vicinity of a human body), it is also possible to employ another method which requires that an electromagnetic wave having a predetermined intensity is used to irradiate a solid organism phantom which has been almost divided into two sections in the longitudinal direction thereof. Immediately after that, the solid organism phantom is exactly divided into two halves, thereby measuring an elevated temperature on the cross section thereof (profile) with the use of a thermograph. While the invention has been particularly shown and described with reference to preferred embodiments thereof, it will be understood by those skilled in the art that the forgoing and other changes in form and details may be made therein without departing from the spirit of the invention.

## Claims

1. A composite dielectric material comprising:
40 - 90 vol% of a thermosetting resin; and
10 - 60 vol% of an electrically conductive powder,
where a total amount including said resin and said powder is 100 vol%.

2. A composite dielectric material comprising:
40 - 90 vol% of a thermosetting resin;
50 vol% or less, excluding 0 vol% of a dielectric ceramic powder; and
10 - 60 vol% of an electrically conductive powder,
where a total amount including said resin, said dielectric ceramic powder and said electrically conductive powder is 100 vol%.

3. A solid organism phantom (1) comprising:
a molded body (5) comprising the composite dielectric material of claim 1 or 2.

4. The solid organism phantom (1) according to claim 3, wherein said phantom (1) is made of a composite dielectric material of claim 1 or 2, and has a shape of a generally human figure imitating at least one part of a human contour.

5. The solid organism phantom (1) according to claim 4, wherein said shape of the generally human figure includes an articular portion (7) which is movable.

6. A method of manufacturing a solid organism phantom (1), comprising the steps of:
mixing and kneading dielectric ceramic powder and electrically conductive powder with a thermosetting resin to obtain a kneaded mixture;
injecting the kneaded mixture into a formation mold and conducting a thermosetting treatment to form a molded part having a predetermined shape; and
assembling together a plurality of said molded parts to form a predetermined configuration.
